# EUROPEAN PATENT APPLICATION

(11) **EP 1 102 047 A1**
(43) Date of publication of application: **23.05.2001**
(21) Application number: 99309103.2
(22) Date of filing: 16.11.1999
(51) Int. Cl.: G01K 1/08, G01K 1/16, G01F 1/684, G01D 11/24, G01D 11/30

(54) **Sensor mounting for a heating/ventilation system**

(71) Applicant: SATCHWELL CONTROL SYSTEMS LIMITED, Slough Berkshire SL1 4UH (GB)
(72) Inventor: Matthews, Dene, Slough, Berkshire SL1 4UH (GB)
(74) Representative: Greenwood, John David

(57) **Abstract**

A heating/ventilation system comprising a sensor having a sensing element provided on one end of an extendable shaft wherein the extendable shaft is a telescopic shaft comprising a number of coaxial sections which are slidable with respect to each other to vary the length of the shaft; the length of the section containing the sensing element being longer than the other slidable sections, a mounting means provided at the other end of the extendable shaft for mounting the shaft; and electrical connections passing from the sensing element along the length of the shaft to the mounting means and fixed thereto.

## Description

Heating and ventilation and similar systems often include a control loop comprising of a sensor to monitor a parameter, for example, the temperature of a heating or cooling fluid or the temperature or humidity of the environment, a corrective element such as a heater, and a control circuit for comparing the detected parameter with a required threshold and controlling the corrective element based on the result of the comparison.

A common sensing method for use in heating and ventilation systems is a thermistor, which is located either directly in an air duct or in a pocket provided in a water tank or pipe. To locate the thermistor within the fluid whose temperature is to be monitored, the sensor is provided on one end of a hollow fixed length rod with electrical connections from the sensor passing through the body of the rod to a terminal block at the opposite end of the rod. For different applications it is necessary to have different length rods to correctly position the sensor element within the process. It is common to have 300mm and 450mm length rods for location of a sensor in an air duct, and 125mm and 200mm length rods which are equivalent to the pocket size in a water system.

In the case of a water monitoring system, the pocket comprises a tube, which is closed at one end. The closed end is placed in the fluid path. The pocket is mechanically attached to the pipe or tank. The open end of the pocket, opens to the outside of the pipe or tank containing the water. In use, the rod including the temperature-sensing element is located in the pocket with the sensor element contacting the closed end. The other end of the rod is mechanically attached to the exposed end of the pocket. Changes in the temperature of the water are transmitted through the end wall of the pocket and cause a corresponding change in the resistance of the thermistor. This resistance can be monitored.

In the case of an air monitoring system the temperature sensing element is located in the air path inside the duct and the sensor assembly is mechanically attached to the duct wall.

In water applications, to ensure that there is a good thermal response to changes in the temperature of the water, it is important that the sensor is pressed against the end of the pocket. A sensor construction is known which provides a spring assembly which supports the temperature sensing element to bias this towards the closed end of the pocket. This is successful in ensuring that the sensor element abuts the end of the pocket where there is a small difference between the length of the pocket and the length of the rod, but it is unable to compensate for larger differences. The provision of a spring bias is also expensive. Therefore it is necessary for the length of the rod to be matched closely to the depth of the tube. Additionally as the probe attachment to the head of the pocket usually varies in arrangements between manufacturers this may not always be easy or reliably overcome in many situations. It is therefore common when fitting a new sensor element to replace the pocket with one designed to match the length of the sensor rod and to the correct mounting feature which locates and secures the sensor in the pocket. This requires that the hydraulic system be drained so that the water at pressure does not leak from the system when the pocket is removed.

Also when the sensor is not positioned in the correct location or is able to move away from the closed end of the pocket due to poor mounting, the determined temperature will not correspond to the temperature which is expected and therefore the process will be incorrectly controlled. Where the sensor should be located at the bottom of a pocket, but, due to the length of the rod is positioned away from the end of the pocket, the reaction time of the sensor will be reduced and therefore the control of the process will lag behind changes in the parameter which is monitored.

With conventional sensors, it is not possible to merely cut the end off the rod to make this of the correct length, since in doing so either the end including the sensor will be removed, or the wires passing through the rod will be cut so that the sensor cannot be connected to the control unit.

Conventional sensors not using a spring to ensure a good contact with the bottom of the pocket usually rely on the use of a heat conductive compound to improve response to temperature change. The paste used is not easily applied to the bottom of the pocket and is usually applied to the sensor tip and inserted with care, hoping that the paste is fully employed. All too often this is not the case and the paste is removed by the pocket wall during insertion.

In practice it is therefore necessary to stock a number of sensors having different length rods for different applications and supply many variant models with sensors and pockets already assembled. This leads to large costs. It is also not unusual for the wrong length sensor device to be supplied for a particular application, and, in many instances, there is no sensor of a length required for a particular application. It is therefore known for installers to provide additional brackets and other supports to mount a sensor having an inappropriate length for a given application.

According to the present invention, there is provided a heating/ventilation system comprising a sensor having a sensing element provided on one end of an extendable shaft wherein the extendable shaft is a telescopic shaft comprising a number of coaxial sections which are slidable with respect to each other to vary the length of the shaft; the length of the section containing the sensor being longer than the other sections, a mounting means provided at the other end of the extendable shaft for mounting the shaft; and electrical connections passing from the sensing element along the length of the shaft to the mounting means and fixed thereto.

The mounting of the telescopic sensor assembly to the pocket device is simple and generic to a wide variety of common devices. This additional length of the last section can permit a heat paste carrying ferrule to be used. The ferrule is free to move along the axis of the shaft by an amount such as to extend past the sensing element giving a clearance area and creating a well over the top of the sensing element permitting the application of a heat conducting compound.

With the system of the present invention, it is only necessary to stock a single type of sensor, which can be used for all applications rather than stocking sensors of different lengths for different applications. This means that it is not necessary to stock as many sensors and therefore is economically advantageous. As the sensor can be shortened to its minimum length, there is also less packaging required compared to the longer fixed length sensor, and therefore packaging and transportation costs are reduced. Furthermore, due to the adjustable length of the rod, the sensor can be used with high accuracy in any application. It is therefore not necessary to replace a pocket so that it corresponds to the length of the sensor, and therefore it is not necessary to drain a system down to replace a pocket.

The fully extended shaft incorporating the thermistor is fully inserted into the pocket. The ferrule containing the heat conducting compound meets with the closed end of the pocket and the insertion force of the shaft pushes the thermistor through the ferrule/heat conducting compound until the thermistor also meets with the closed end of the pocket. The shaft and bead slide through the ferrule. The ferrule remains intact for future use including maintenance.

The insertion force collapses the telescopic shaft thus optimising the length to match the specific requirements of the pocket removing any need for cutting or extending wires. Furthermore connection of the sensor to the pocket is simple and will always ensure the optimum performance of the sensor.

The provision of a longer coaxial shaft component to support the sensing element ensures optimum operation of the shaft during insertion or, indeed, during compression of the shaft in general. This ensures that no significant gap can form between adjacent coaxial sections and reduces the likelihood of ingress by corrosive liquid or gas. It also ensures that the head of the sensor engages properly with the end of the pocket in applications in which the sensor is inserted into a pocket. In addition, it enables the employment of a ferrule to ensure appropriate compound application.

The same ferrule can be used in an air application where the ferrule is fixed in position supporting the thermistor in the air flow whilst providing mechanical protection.

The shaft preferably includes at least four sections. This allows the shaft to extend from a minimum length of about 100mm to a maximum length of about 350mm. Advantageously, the shaft may comprise five sections allowing the shaft to extend to a maximum length of 450mm.

The sensor assembly can be used for temperature or humidity applications. Where the sensing element used is a thermistor, then it is advantageous for the thermistor to be covered in heat paste to give good thermal conductivity where the thermistor meets with the closed end of the pocket.

Preferably the sensor has a maximum width allowing it to be provided in most conventional pockets. Typically pockets have an internal diameter of between 6 and 12mm, and accordingly the sensor advantageously has a maximum width of less than 6mm.

An example of the present invention will be described in accordance with the accompanying drawings, in which:
Fig. 1 is a side view of a sensor in a system in accordance with the present invention both in an extended un-installed state and installed into a pocket.
Fig. 2A and 2B are side cross-sectional views of a sensor in a system according to the present invention in an extended and un-extended state;
Fig. 3 is a schematic diagram of an air duct having sensors installed therein.

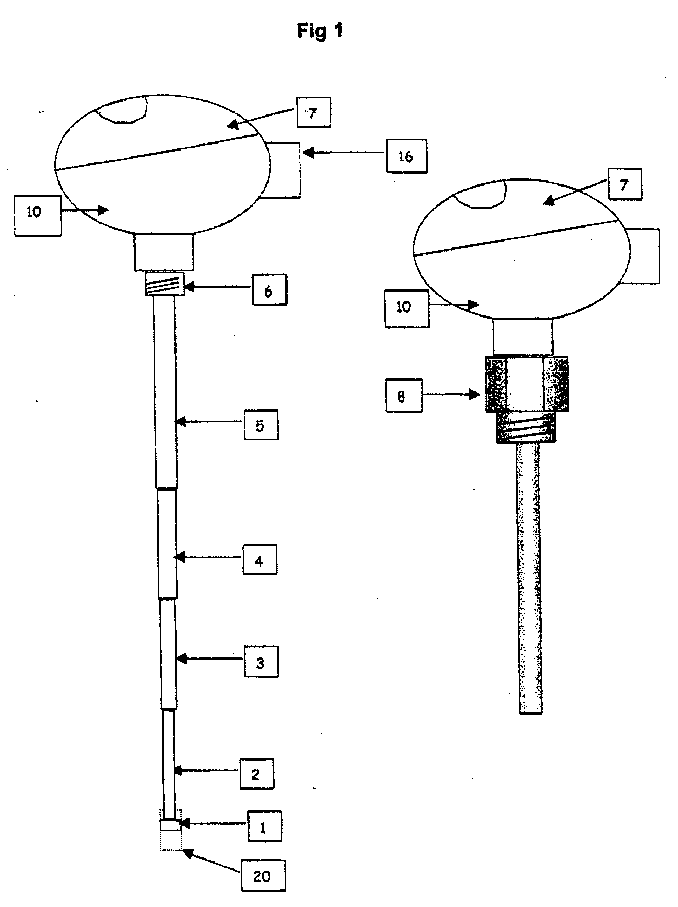

Referring to Figure 1, a pipe (not shown) contains water or other liquid (not shown either) which may be used in a heating or ventilation system. The pipe includes a pocket 8 which comprises a tube of stainless steel or brass having an opening to the outside of the pipe and a closed bottom which, in use, is below the level of water in the pipe.

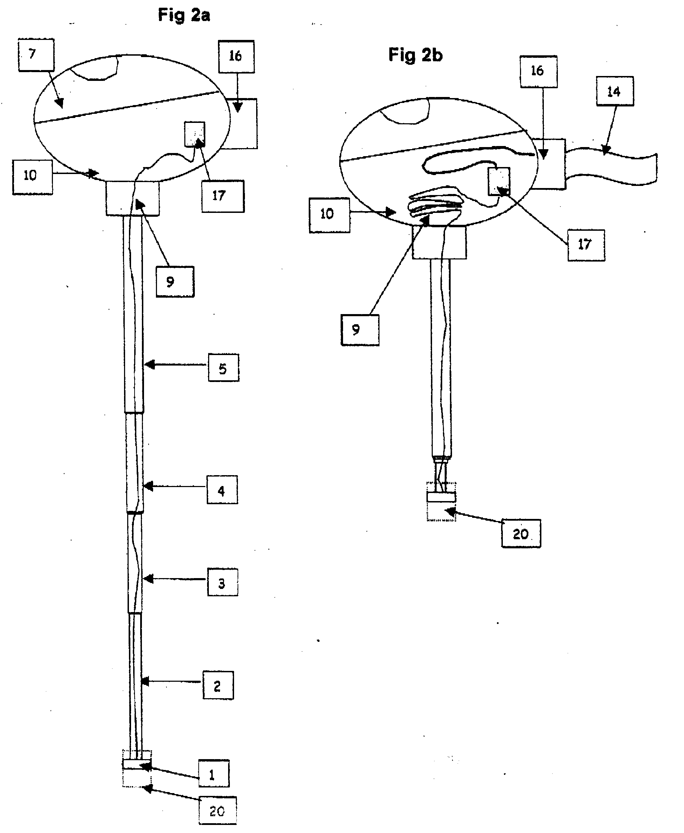

Referring to figures 2a and 2b, a thermistor 1 is mounted on the end of a telescopic shaft which includes four sections 2, 3, 4, 5. The sections 2, 3, 4, 5 are provided coaxially and are longitudinally slidable with respect to each other. The thermistor 1 is mounted on the longest and thinnest end section 2 which is received in a section 3, received in a further section 4, which in turn is received in the end section 5. Each of the sections are made of stainless steel, however such sections could be made of other metal or plastics material, for example aluminium or FORTON (Trade Mark).

The end of the telescopic shaft remote from the thermistor 1 includes a sensor head 10. This includes fixing means 6 for mounting the sensor to the pipe over the opening of the pocket 8 and a rotatable top 7. Wires 9 pass from the thermistor 1 to the sensor head 10 to connect the thermistor 1 to control electronics (not shown) provided in the sensor head 10 for producing an electrical output dependent upon the temperature of the thermistor 1, and for outputting this to a control circuit via the top 7. The top 7 is arranged to be able to rotate independently to the fixing means 6, so that it can be moved to ensure that the electrical connection inlet 16 is in an optimum position for attaching connection wire 14 to an electrical connection block 17 (Figure 2b). The control circuit in turn controls a corrective element, for example a heater (not shown) so that when the thermistor 1 is at a temperature below a predetermined threshold, the heater is operated to increase the temperature of the water passing through the pipe. Alternatively the sensor can be used for monitoring applications. Enough space is provided that the wires 9 can still be accommodated when the shaft is at its minimum length.

In use, the thermistor 1 is covered in a heat conductive paste and the sections of the telescopic shaft are slid, either prior to or during insertion into the pocket, with respect to each other so that the distance between the sensor head 5 and the thermistor 1 corresponds to the internal length of the pocket 8. The conductive paste is transported in a slidable ferrule 20 to ensure minimum paste use and correct deployment. If adjustment is performed prior to insertion the telescopic shaft is then inserted into the pocket 8 so that the thermistor 1 is pressed against the bottom of the pocket 8. The sensor head 5 is then connected to the open end of the pocket and to the pipe.

The well area of the ferrule is filled with heat conductive compound during manufacture. The clearance area may be such that a small amount of the very high viscosity compound can be left intact on the surface of the bead yet protected from vibration in transit and fitting. During insertion into the pocket, the ferrule is first to meet with the closed end of the pocket, as more pressure is applied to the sensor shaft, causing the ferrule to be pushed back along the first telescopic member until the sensing element itself pushes through to ensure a perfect contact. The telescopic element continues to collapse until the sensor head can be mechanically connected to the open end of the pocket. The sensor shaft incorporating a means of connection to the pocket, continues to ensure a good thermal contact by pushing down on the bead whilst providing a sound fixing.

Due to the conductive paste surrounding the thermistor 1, the temperature of the water passing through the pipe is conveyed through the closed end of the pocket 8 and the heat paste to the thermistor 1. The resistance of the thermistor 1 is dependent upon the temperature of the water surrounding the closed end of the pocket. The control electronics, which may include a resistive bridge, produces an output which is dependent upon the resistance of the thermistor 1 and hence dependent upon the temperature of the water. A controller then controls the heater depending upon the determined temperature of the water.

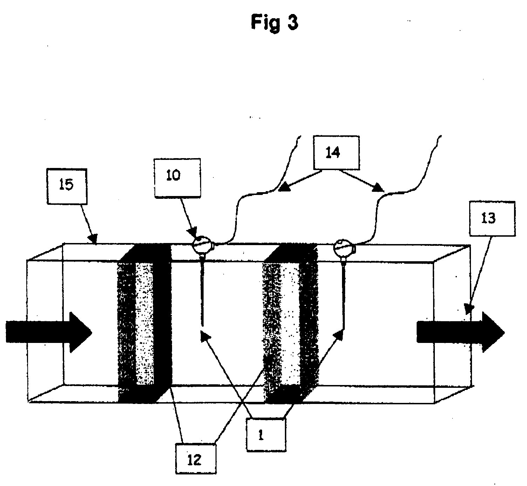

The sensor need not be provided in a pocket, but could extend directly into an air flow path, for example directly into an air duct 15, as shown in figure 3. As can be seen from figure 3, the air duct 15 has a directional air flow 13 which ensures that air passes through heating or cooling elements 12. Sensor heads 1 are positioned at an optimum location within the duct 15 to ensure accurate reading of air temperature, with their position being adjustable by adjustment of the sensor.

## Claims

1. A heating/ventilation system comprising a sensor having a sensing element provided on one end of an extendable shaft wherein the extendable shaft is a telescopic shaft comprising a number of coaxial sections which are slidable with respect to each other to vary the length of the shaft; the length of the section containing the sensing element being longer than the other slidable sections, a mounting means provided at the other end of the extendable shaft for mounting the shaft; and electrical connections passing from the sensing element along the length of the shaft to the mounting means and fixed thereto.

2. A system according to claim 1, wherein the shaft comprises at least four sections.

3. A system according to claim 1, wherein the shaft comprises five sections.

4. A system according to any proceeding claim further comprising a paste containing ferrule positioned over the end of the sensor.

5. A system according to any preceding claims wherein the system conveys a liquid and the sensor element is a temperature sensor.

6. A system according to any of claims 1 to 3, wherein the system conveys a gas, and the sensor is a humidity sensor.

7. A system according to claim 1 to 5 wherein the sensor element is a thermistor.

8. A system according to any preceding claims, further comprising a conventional pocket wherein the sensor has a maximum width allowing it to fit in the pocket.

9. A system according to claim 8, wherein the sensor has a maximum width of less than 6mm.
